(19) Europäisches Patentamt

European Patent Office

Office européen des brevets

(11) **EP 0 840 031 A1**

(12) **EUROPÄISCHE PATENTANMELDUNG**

(43) Veröffentlichungstag:
06.05.1998 Patentblatt 1998/19

(51) Int. Cl.$^6$: **F16F 1/368**, B60G 11/08

(21) Anmeldenummer: 97116445.4

(22) Anmeldetag: 22.09.1997

(84) Benannte Vertragsstaaten:
AT BE CH DE DK ES FI FR GB GR IE IT LI LU MC NL PT SE

(30) Priorität: 02.11.1996 DE 19645236

(71) Anmelder:
**Volkswagen Aktiengesellschaft**
**38436 Wolfsburg (DE)**

(72) Erfinder:
**Henkelmann, Hartmut, Dipl.-Ing.**
**38518 Gifhorn (DE)**

(54) **Radachse für ein Kraftfahrzeug**

(57) Die Erfindung betrifft eine Radachse für ein Kraftfahrzeug, insbesondere eine Hinterachse, mit einer sich in Fahrzeug-Querrichtung erstreckenden Blattfeder (2), die an ihren Enden in Verbindungspunkten (A, E) mit Radträgern (5, 6) verbunden ist und in einem mittleren Bereich in Lagerpunkten (C, D) an einem Fahrzeugaufbau (4) befestigt ist.

Um eine direkte Verbindung der Querblattfeder mit den Radträgern der Fahrzeugräder zu ermöglichen und dennoch sicherzustellen, daß der Fahrer eine Überbeanspruchung der Radachse an den Fahrzeugrädern erkennt, bevor das Fahrzeug fahruntüchtig wird, ist die Blattfeder (2) bezüglich ihrer Dimensionierung (Länge L, Dicke H, Breite B) und ihrer Materialeigenschaften derartig ausgebildet, daß an den Verbindungspunkten (A, E) mit den Radträgern (5, 6) angreifende Kräfte (F) in einem Bereich der Blattfeder einen Schubbruch bewirken, der zu einer Teilung der Blattfeder in einer im wesentlichen horizontalen Ebene (10) führt, bevor in einem Bereich der Blattfeder (2) ein Biegebruch bewirkt wird.

Fig 1

## Beschreibung

Die Erfindung bezieht sich auf eine Radachse für ein Kraftfahrzeug gemäß dem Oberbegriff von Anspruch 1.

Eine derartige Radachse ist aus der EP 0 265 682 B1 bekannt. Die Radträger einer Achse werden durch eine sich in Fahrzeug-Querrichtung erstreckende Blattfeder miteinander verbunden, die wiederum in zwei zueinander in Fahrzeug-Querrichtung versetzten Lagerpunkten am Fahrzeugaufbau befestigt ist. Die Blattfeder ermöglicht dabei insbesondere Ein- und Ausfederbewegungen des Fahrzeugrads gegenüber dem Fahrzeugaufbau in Fahrzeug-Hochrichtung, so daß auf zusätzliche Federeinrichtungen wie z. B. radseitig angeordnete Schraubenfedern ganz verzichtet werden kann oder diese entsprechend kleiner dimensioniert werden können.

Nachteilhaft an einer derartigen Radachse, bei der die Blattfeder die beiden Radträger direkt verbindet, ist jedoch, daß bei einem Versagen der Querblattfeder, wie z. B. einer kurzzeitigen Überbeanspruchung durch kurze, heftige, auf die Fahrzeugräder einwirkende Stöße, ein Biegebruch der radführenden Blattfeder auftreten kann. Ein solcher Biegebruch der radführenden Blattfeder, der diese in ihrer Längsrichtung unterteilt, kann zu einem vollständigen Verlust der Radführung führen, woraufhin die Räder seitlich wegbrechen und/oder sich querstellen, was während einer Fahrt zu gefährlichen Situationen führen kann.

Aus diesem Grund werden als Radachsen dienende Querblattfedern in Kraftfahrzeugen derzeit nicht direkt zur Radführung verwendet, d. h. nicht direkt an die Radträger angebunden, sondern die Enden der Blattfeder sind über Radführungslenker mit dem Radträger verbunden. Die DE 41 40 236 A1 beschreibt eine derartige Radachse. Durch die zusätzliche Verwendung von Radführungslenkern aus einem duktilen Metall kann erreicht werden, daß bei einer Überbeanspruchung durch an den Rädern angreifende Kräfte die Radführungslenker entsprechend gedehnt werden, so daß der Fehler durch eine Schiefstellung des betreffenden Fahrzeugrads erkannt werden kann, bevor das Fahrzeug fahruntauglich wird. Die zusätzliche Verwendung von Radführungslenkern bedeutet jedoch einen höheren konstruktiven Aufwand, ein höheres Gesamtgewicht und höhere Herstellungskosten der Radachse.

Der Erfindung liegt die Aufgabe zugrunde, eine Radachse zu schaffen, die die direkte Verbindung einer Querblattfeder mit den Radträgern der Fahrzeugräder ermöglicht und dennoch sicherstellt, daß im Falle einer Überbeanspruchung der Radachse durch bei Betriebslasten auftretende Kräften an den Fahrzeugrädern der Fehler vom Fahrer erkannt werden kann, bevor das Fahrzeug fahruntüchtig wird.

Diese Aufgabe wird durch eine Radachse nach Anspruch 1 gelöst. Die Unteransprüche beschreiben bevorzugte Weiterbildungen der erfindungsgemäßen Radachse.

Der Erfindung liegt der Gedanke zugrunde, eine Blattfeder bezüglich ihrer Federform, ihres Breiten- und Dicken-Verlaufs und ihrer Materialeigenschaften derartig zu dimensionieren, daß bei einem Versagen durch an den Radträgern angreifende Kräfte in der Blattfeder ein Schubbruch in einer im wesentlichen horizontalen Ebene erreicht wird, bevor ein Biegebruch auftreten kann. Da die horizontale Aufspaltung der Blattfeder zwei oder mehrere Teilfedern mit entsprechend geringerer Dicke erzeugt, und die Federkonstante einer Blattfeder gegenüber vertikalen Auslenkungen proportional dem Kehrwert der dritten Protenz der Dicke der Blattfeder ist, führt eine solche horizontale Aufspaltung der Blattfeder zu einer deutlichen Abnahme der Federkonstante der Blattfeder, so daß der Fahrzeugaufbau an der betreffenden Achsseite absinkt bis in einen Dämpferanschlag.

Somit wird ein Achsbruch vom Fahrer erkannt, ohne daß die beschädigte Achse ihre radführenden Eigenschaften verliert. Die Blattfeder kann somit direkt als radführendes Bauteil verwendet werden, das die Radträger der beiden Räder einer Radachse miteinander verbindet, ohne daß die Gefahr besteht, daß entweder ein Schaden in der Achse nicht erkannt wird oder aber ein Achsbruch während einer Fahrt zu einem Verlust der radführenden Eigenschaften und somit der Fahrstabilität führt.

Die erfindungsgemäße Dimensionierung kann dabei z. B. nach Anspruch 2 erreicht werden, indem die Breite und die Dicke der Blattfeder, zumindest in einem Endbereich der Blattfeder bei den Radträgern, in einer bestimmten Beziehung zueinander stehen. Weiterhin kann die Entstehung von Schubbrüchen gegenüber der Entstehung von Biegebrüchen bevorzugt werden, indem die Blattfeder nach Anspruch 5 durch Imperfektionen in einem bezüglich der Höhe mittleren Bereich geschwächt wird.

Für die Blattfeder kann dabei insbesondere ein Fasers-Kunststoff-Verbund als.

Die Erfindung wird im folgenden anhand der beiliegenden Zeichnungen an einigen Ausführungsformen näher erläutert. Es zeigen:

Figur 1    eine Darstellung einer Radachse gemäß einer ersten Ausführungsform der Erfindung;

Figur 2    eine perspektivische Ansicht einer Blattfeder einer derartigen Radachse;

Figur 3    die Blattfeder einer Radachse gemäß einer zweiten Ausführungsform der Erfindung.

Figur 4    den Verlauf der Schubspannung und Biegespannung in einer Blattfeder.

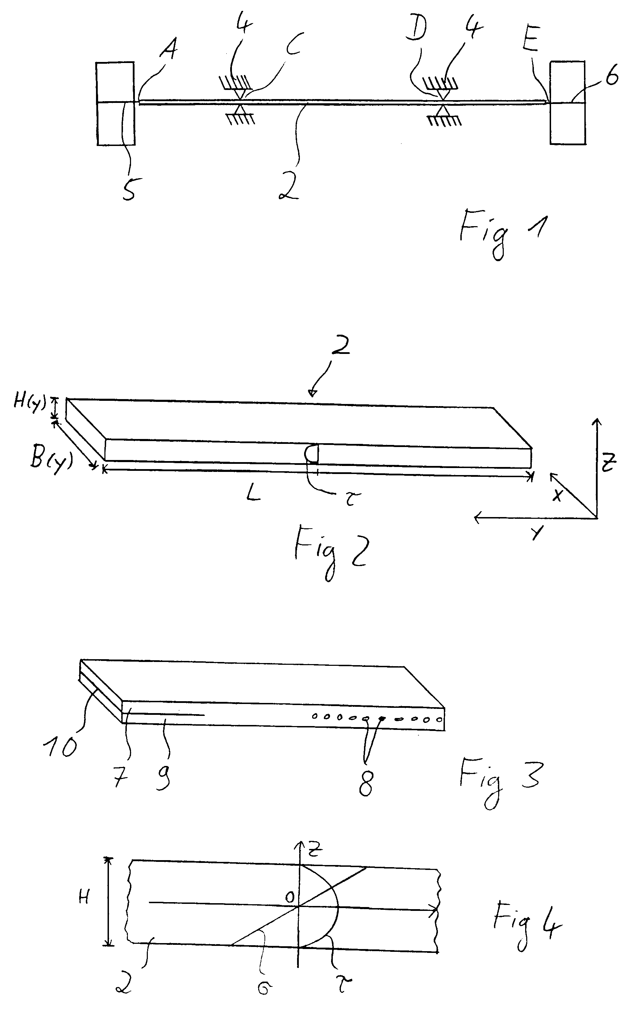

Eine Radachse weist gemäß Figur 1 eine sich in Fahrzeug-Querrichtung erstreckende Blattfeder 2 auf, die an ihren Enden in Verbindungspunkten A, E mit Radträgern 5, 6 verbunden ist. Die Blattfeder ist in ihrem mittleren Bereich in Anlenkpunkten C, D an einem Fahrzeugaufbau 4 befestigt.

Die Querblattfeder 2 ist dabei gemäß Figur 2 im wesentlich quaderförmig ausgebildet, wobei sich die Höhe H der Blattfeder in Fahrzeug-Z-Richtung, die Breite B in Fahrzeug-X-Richtung und die Länge L in Fahrzeug-Y-Richtung erstreckt. Die Höhe H und die Breite B können dabei grundsätzlich über die Längserstreckung y der Blattfeder variiert werden.

Erfindungsgemäß ist vorgesehen, die Feder derartig zu dimensionieren, daß an den Verbindungspunkten der Radträger an den Enden der Blattfeder angreifende Kräfte, die auf Betriebslasten beruhen, in der Blattfeder ein Schubbruch bewirken, bevor ein Biegebruch bzw. Schubbruch auftreten kann.

Dies kann zum einen durch eine entsprechende Dimensionierung von H (y) und B (y) erreicht werden. Dabei muß gewährleistet werden, daß die maximal zulässige Schubspannung in der Feder erreicht wird, während die maximal zulässige Zugspannung (Biegespannung) in der Feder noch nicht erreicht wird, d.h. $\tau > \tau_{max}$ und $\sigma \leq \sigma_{max}$. Da bei einer an der Blattfeder angreifenden Kraft F die Zugspannung $\sigma$ in der Blattfeder

$$\sigma = 6\,F\,L/(B\,H^2) \leq \sigma_{max} \qquad (1)$$

beträgt, und die aus der Kraft F resultierende Schubspannung $\tau$

$$\tau = F/(B\,H) > \tau_{max} \qquad (2)$$

beträgt, gilt somit aus (1) und (2) :

$$6\,F\,L\,/(H^2\,\sigma_{max}) \leq B < F/(H\,\tau_{max})$$

und somit z.B.

$$H > (\tau_{max}\,/\,\sigma_{max})\,L/6,$$

woraus auch B ermittelt werden kann.

Diese Relation kann bei einer Feder mit konstantem H und konstantem B direkt realisiert werden, indem die Materialkonstanten $\tau_{max}$ und $\sigma_{max}$ eingesetzt werden. Für einen Faser-Kunststoff-Verbund wie z. B. glasfaserverstärkten Kunststoff (GFK) beträgt das Verhältnis $\tau_{max}\,/\,\sigma_{max}$ etwa 0,05. Dieses Material ist somit besser geeignet als z.B. Stahl mit $\tau_{max}\,/\,\sigma_{max}$ = 0,8.

Greift nunmehr eine Kraft F an den Verbindungspunkten A an den seitlichen Enden der Blattfeder an, tritt entsprechend ein Schubbruch in der Blattfeder auf, der die Blattfeder 2 gemäß Figur 3 in einer horizontal verlaufenden Ebene 10 unterteilt, so daß zwei übereinanderliegende Blattfederenden 7 und 9 entstehen, deren Gesamthöhe der Höhe H der Feder entspricht.

Da die Federkonstante C einer Blattfeder bei einer Biegebeanspruchung sich zur Federdicke H verhält gemäß

$$C \sim 1/H^3\,,$$

bewirkt eine Unterteilung der Feder in z. B. zwei Enden 9 und 10 gemäß Fig.3 mit jeweils einer Dicke von H/2, daß die Feder im Bereich des gespaltenen Blattendes ¼ der ursprünglichen Federrate besitzt. Das Auto sinkt dementsprechend in der betreffenden Achse mit dem Schubbruch ab, da der gleichbleibenden auf der betreffenden Achse lastenden Gewichtskraft nur ein Viertel der Gegenkraft von der Feder entgegengesetzt werden kann.

Im rechten Radfederende von Figur 3 ist angedeutet, daß durch Imperfektionen 8 in einem bezüglich der Blattfederhöhe mittleren Bereich auch bewußt ein Schubbruch erzeugt werden kann. Die Imperfektionen können dabei z. B. durch Bohrungen oder auch durch andere Materialschwächungen erreicht werden, indem z. B. in einem schichtweise aufgebauten FaserKunststoff-Verbund im mittleren Bereich der Feder ein schwächeres Material eingesetzt wird. Bei einer am Blattfederende angreifenden Kraft kann somit ein Schubbruch gegenüber einem Biegebruch bevorzugt erzeugt werden.

Durch die Imperfektionen 8 kann dabei ausgenutzt werden, daß gemäß Figur 4 die Schubspannung $\tau$ der Blattfeder in Fahrzeug-Hochrichtung (Z-Richtung) einen paraboloiden Verlauf aufweist, wohingegen die Schubspannung Sigma einen linearen Verlauf aufweist, der im Mittelpunkt der Feder einen Nulldurchgang macht. Somit bewirken Imperfektionen im mittleren Bereich der Feder einen Schubbruch aufgrund der dort maximalen Schubspannung $\tau$, wohingegen hier kein Biegebruch auftritt.

Das Auftreten eines Schubbruchs vor einem möglichen Biegebruch kann weiterhin durch eine entsprechende Anbringung der Radträger 5, 6 an den Blattfederenden unterstützt werden, wobei hier auf die bekannten Möglichkeiten zur Anbringung eines Radträgers an einem Blattfederende zurückgegriffen werden kann.

## Patentansprüche

1. Radachse für ein Kraftfahrzeug, insbesondere Hinterachse, mit einer sich in Fahrzeug-Querrichtung erstreckenden Blattfeder (2), die an ihren Enden in Verbindungspunkten (A, E) mit Radträgern (5, 6) verbunden ist und in einem mittleren Bereich in Lagerpunkten (C, D) an einem Fahrzeugaufbau (4) befestigt ist,
dadurch gekennzeichnet, daß
die Blattfeder (2) bezüglich ihrer Dimensionierung (Länge L, Dicke H, Breite B) und ihrer Materialeigenschaften derartig ausgebildet ist, daß an den Verbindungspunkten (A, E) mit den Radträgern (5, 6) angreifende Kräfte (F) in einem Bereich der Blattfeder einen Schubbruch bewirken, der zu einer Teilung der Blattfeder in einer im wesentlichen horizontalen Ebene (10) führt, bevor in einem Bereich ein Biegebruch bewirkt wird.

2. Radachse nach Anspruch 1, dadurch gekennzeichnet, daß die Blattfeder (2) zumindest in ihren seitlichen Endbereichen quaderförmig ausgebildet ist, wobei das Verhältnis einer Höhe (H) der Blattfeder zu ihrer Länge (L) größer als ein vorgegebener Wert ist.

3. Radachse nach Anspruch 2, dadurch gekennzeichnet, daß das Verhältnis von Höhe (H) zu Länge (L) der Blattfeder größer ist als ein sechstel des Verhältnisses von maximal möglicher Schubspannung ($\sigma$ max) zu maximal möglicher Zugspannung ($\sigma$ max) des betreffenden Materials.

4. Radachse nach einem der Ansprüche 1 bis 3, dadurch gekennzeichnet, daß die Blattfeder aus einem Faser-Kunststoff-Verbund hergestellt ist, vorzugsweise aus einem glasfaserverstärkten Kunststoff.

5. Radachse nach einem der Ansprüche 1 bis 4, dadurch gekennzeichnet, daß die Blattfeder in einem bezüglich ihrer Höhe (H) mittleren Bereich Materialschwächungen (8) aufweist.

6. Radachse nach Anspruch 5, dadurch gekennzeichnet, daß die Materialschwächungen Bohrungen in der Blattfeder sind.

7. Radachse nach Anspruch 5, dadurch gekennzeichnet, daß die Blattfeder (2) in einem mittleren Bereich eine Schicht oder mehrere Schichten mit geringerer Schubfestigkeit aufweist.

Fig 1

Fig 2

Fig 3

Fig 4

# EP 0 840 031 A1

| | **Europäisches Patentamt** | **EUROPÄISCHER RECHERCHENBERICHT** | **Nummer der Anmeldung** EP 97 11 6445 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>Y | US 5 244 189 A (PIERMAN RICHARD F)<br>* Spalte 1, Zeile 66 - Spalte 2, Zeile 9 *<br>* Spalte 3, Zeile 13 - Zeile 17; Abbildung 1 * | 1,2,5,7<br>4 | F16F1/368<br>B60G11/08 |
| Y | T. GÖTTE: "Grundlagen der Dimensionierung von Nutzfahrzeug-Blattfedern aus Faser-Kunststoff-Verbunden"<br>KUNSTSTOFFE.,<br>Bd. 75, Nr. 2, Februar 1985, MUNCHEN DE,<br>Seiten 100-104, XP002055764 | 4 | |
| A | | 3 | |

| | RECHERCHIERTE SACHGEBIETE (Int.Cl.6) |
|---|---|
| | F16F<br>B60G |

Der vorliegende Recherchenbericht wurde für alle Patentansprüche erstellt

| Recherchenort | Abschlußdatum der Recherche | Prüfer |
|---|---|---|
| BERLIN | 16.Februar 1998 | Wiberg, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)